Europäisches Patentamt

European Patent Office

Office européen des brevets

(19)

(11) Veröffentlichungsnummer : **0 116 810**
**B1**

(12) **EUROPÄISCHE PATENTSCHRIFT**

(45) Veröffentlichungstag der Patentschrift :
06.05.87

(51) Int. Cl.⁴ : **G 01 P 15/09**

(21) Anmeldenummer : **83810073.3**

(22) Anmeldetag : **21.02.83**

(54) Duales Accelerometer, Verfahren zu dessen Herstellung und Anwendung desselben.

(43) Veröffentlichungstag der Anmeldung :
**29.08.84 Patentblatt 84/35**

(45) Bekanntmachung des Hinweises auf die Patenterteilung : **06.05.87 Patentblatt 87/19**

(84) Benannte Vertragsstaaten :
**AT CH DE FR GB LI**

(56) Entgegenhaltungen :
**CH-A- 472 668**
**DE-A- 1 523 205**
**US-A- 3 727 084**
**US-A- 3 744 322**
**US-A- 4 213 114**

(73) Patentinhaber : **VIBRO-METER SA**
**Route de Moncor 4**
**CH-1700 Fribourg (CH)**

(72) Erfinder : **Schmid, Felix**
**24, route du Bugnon**
**CH-1752 Villars-sur-Glâne (CH)**

(74) Vertreter : **Steiner, Martin et al**
**c/o AMMANN PATENTANWAELTE AG BERN**
**Schwarztorstrasse 31**
**CH-3001 Bern (CH)**

**Beschreibung**

Ein duales Accelerometer mit einer Montagebasis und zwei übereinander zwischen der Montagebasis und einer gemeinsamen seismischen Masse angeordneten elektromechanischen Wandlern bringt die Anmelderin seit einiger Zeit auf den Markt, wobei die Achsen der Empfindlichkeit der beiden Wandler senkrecht zueinander stehen, das heisst die Wandler messen Beschleunigungskomponenten in zwei senkrecht zueinander stehenden Richtungen. Der Abgleich der beiden Wandler auf gleiche Empfindlichkeit erfolgt dadurch, dass jeder Wandler aus einer verhältnismässig hohen Zahl von einzelnen piezoelektrischen Elementen aufgebaut wird, wobei die Zahl und die individuelle Empfindlichkeit der Elemente so abgestimmt und ausgewählt werden, dass sich gleiche Empfindlichkeit der Wandler ergibt. Die Genauigkeit der Uebereinstimmung der beiden Empfindlichkeiten ist bei diesem Verfahren sehr beschränkt, da sich die Empfindlichkeiten der einzelnen Wandler während der Herstellungsprozesse mehr oder weniger stark ändern können. Dieses Vorgehen erschwert nicht nur die Herstellung, sondern setzt auch die Verwendung verhältnismässig hoher Zahlen von piezoelektrischen Elementen in jedem Wandler voraus, womit das Accelerometer teuer in der Herstellung wird.

Es ist auch bekannt, zwei identische Accelerometer mit gleicher Empfindlichkeitsachse, also monoaxiale Accelerometer, zur Vibrationsüberwachung von rotierenden Maschinen, insbesondere Flugzeugtriebwerken, zu verwenden. Die beiden Geber solcher Accelerometer sind an zwei unabhängige Messkreise angeschlossen, um die Redundanz der Messvorrichtung zu erhöhen (US-Patent 4 213 114).

Diese bekannte Lösung führt auch zu einer relativ teuren, voluminösen und schweren Konstruktion. Zum Einbau in Triebwerke von Flugzeugen sollten jedoch die Accelerometer möglichst klein und leicht ausgeführt werden können.

Aus der DE-OS 1 523 205 ist ein Beschleunigungs- und Schwingungswandler bekannt, welcher eine Messunterlage aufweist, auf welcher zwei piezokeramische oder piezoelektrische Kristallsätze und zwei seismische Massen angebracht sind. Der Wandler weist eine elastische Vorspannung der Sätze und der seismischen Massen auf, indem das Gehäuse in eine elastisch deformierbare Hülse übergeht. Die Empfindlichkeiten der beiden Kristallsätze sind so aufeinander abgestimmt, dass sie bei Einwirkung einer bestimmten Kraft genau gleich grosse aber entgegengesetzt gepolte Ladungen abgeben.

Der vorliegenden Erfindung liegt die Aufgabe zugrunde, ein duales Accelerometer mit Wandlern übereinstimmender Empfindlichkeit zu schaffen, welches eine einfache Herstellung erlaubt und geringes Volumen und Gewicht aufweist. Die Lösung ist im Anspruch 1 ; mit einem Verfahren im Anspruch 9 und einer Anwendung im Anspruch 10 angegeben, wobei von einem Stand der Technik nach der DE-OS 1 523 205 ausgegangen wird.

Die beiden seismischen Massen können in diesem Falle so gewählt werden, daß die beiden Wandler auch bei einer sehr niedrigen Zahl piezoelektrischer Elemente auf gleiche Empfindlichkeit gebracht werden können. Der eine Wandler, auf den nur die gemeinsame seismische Masse wirkt, kann beispielsweise nur zwei piezoelektrische Elemente, der andere Wandler, auf welchen die beiden seismischen Massen sowie die Masse des dazwischen liegenden Wandlers wirkt, nur ein piezoelektrisches Element aufweisen. Es ist auch eine Feinabstimmung der beiden Wandler auf gleiche Empfindlichkeit durch entsprechendes Abarbeiten der gemeinsamen und der zusätzlichen seismischen Masse möglich. Dank dieser Abstimmbarkeit kann eine sehr geringe Zahl piezoelektrischer Elemente aus sehr hochempfindlichem Piezomaterial verwendet werden, wodurch sich trotz der Verwendung einer zusätzlichen seismischen Mass insgesamt eine Reduktion des Gewichtes und des Volumens des Accelerometers ergibt.

Im folgenden ist die Erfindung anhand eines Ausführungsbeispiels und einer besonderen Anwendung des Accelerometers näher erläutert.

Figur 1   zeigt einen Schnitt durch das Accelerometer und

Figur 2   ist ein Schaltbild zur Erläuterung der Anwendung des Accelerometers.

Der aktive Teil des Accelerometers weist eine Montagebasis 1, einen ersten piezoelektrischen Wandler 2, einen zweiten piezoelektrischen Wandler 3, eine gemeinsame seismische Masse 4, eine zusätzliche seismische Masse 5 zwischen den beiden Wandlern und einen Bolzen 6 zur festen Verbindung der Teile 1 bis 5 auf. Der Bolzen 6 ist in der Montagebasis 1 verankert und eine auf das obere Ende des Bolzens 6 aufgesetzte Mutter 6a, die im festgeschraubten Zustand durch Verschweissen gesichert ist, setzt die Elemente 2 bis 5 unter derartige Vorspannung, dass in denselben für alle vorkommenden Beschleunigungen nur Druckkräfte auftreten. Die aktiven Teile des Accelerometers sind mittels der Montagebasis 1 in einem Gehäuse 7 montiert, dessen Flansch 7a mit drei Montagelöchern 7b versehen ist.

Der untere Wandler 2 weist ein einziges piezoelektrisches Element 2a und ein ferroelektrisches Element 2b auf. Diese beiden Elemente liegen zwischen nicht bezeichneten Isolierscheiben. Der Wandler 3 weist zwei piezoelektrische Elemente 3a auf, die zwischen nicht bezeichneten Isolierscheiben liegen. Die Anschlüsse des Wandlers 3 sind durch eine Bohrung der zusätzlichen seismischen Masse 5 und alle Anschlüsse durch einen hermetischen Abschluss 8 in einem Stutzen 7c des Gehäuses 7 isolierend durchgeführt. Die übrigen internen Verbindungen und Anschlüsse der beiden Wandler 2 und 3 sind nur schematisch angedeutet. Der Wandler 3 weist praktisch doppelte Empfindlichkeit bezüglich des Wandlers 2 auf, dagegen ist dank der ferroelektrischen Scheibe 2b ein kapazitiv identischer Aufbau der beiden Wandler erreicht, derart, dass allfällige elektrische Störeinflüsse minimalisiert werden bzw. sich auf beide Wandler gleich auswirken. Durch eine flexible elektrische Verbindung zwischen der zusätzlichen seismischen Masse 5 und der Montagebasis 1 ist dafür gesorgt, dass die beiden seismischen Massen und die Montagebasis stets auf dem gleichen elektrischen Potential mit dem Gehäuse 7 gehalten werden, so dass jeder störende Einfluss durch elektrostatische Felder vermieden und zugleich eine Abschirmung der beiden Wandler erreicht wird. Durch die hermetischen elektrischen Durchführungen durch den Abschluss 8 wird erreicht, dass die Wandler vor störenden Umwelteinflüssen geschützt sind.

Wie erwähnt, weist der Wandler 3 etwa doppelt so hohe Empfindlichkeit auf wie der Wandler 2. Auf den Wandler 3 wirken bei Beschleunigungen im Wesentlichen nur Massenkräfte der seismischen Masse 4, während auf den Wandler 2 Massenkräfte beider seismischer Massen 4 und 5 sowie des Wandlers 3 wirken. Die zusätzliche seismische Masse 5 ist also ungefähr so zu wählen, dass sie zusammen mit der Masse des Wandlers 3 etwa gleich ist der seismischen Masse 4. Unter diesen Umständen wirken auf den Wandler 2 ungefähr doppelte Massenkräfte verglichen mit den auf den Wandler 3 wirkenden Massenkräfte ein. Für bestimmte Beschleunigungen werden also die beiden Wandler 2 und 3 praktisch gleiche elektrische Signale erzeugen. Die vollständige Abstimmung auf gleiche Ausgangssignale wird während der Fabrikation vorgenommen, bevor die aktiven Teile in das Gehäuse 7 eingesetzt werden. Nachdem die Teile 1 bis 5 verschraubt und vorgespannt sind, werden die Signale der beiden Wandler unter bestimmten Bedingungen gemessen und verglichen. Durch Abarbeiten der gemeinsamen seismischen Masse 4 wird nun vorderhand die Empfindlichkeit des Wandlers 3 auf den gewünschten Wert gebracht. Hierauf wird durch Abarbeiten der zusätzlichen seismischen Masse 5 auch der Wandler 2 auf eine solche Empfindlichkeit gebracht, dass wiederum beide Wandler unter gleichen Bedingungen gleiche Signale abgeben. Die aktiven Teile werden dann in das Gehäuse 7 eingebaut.

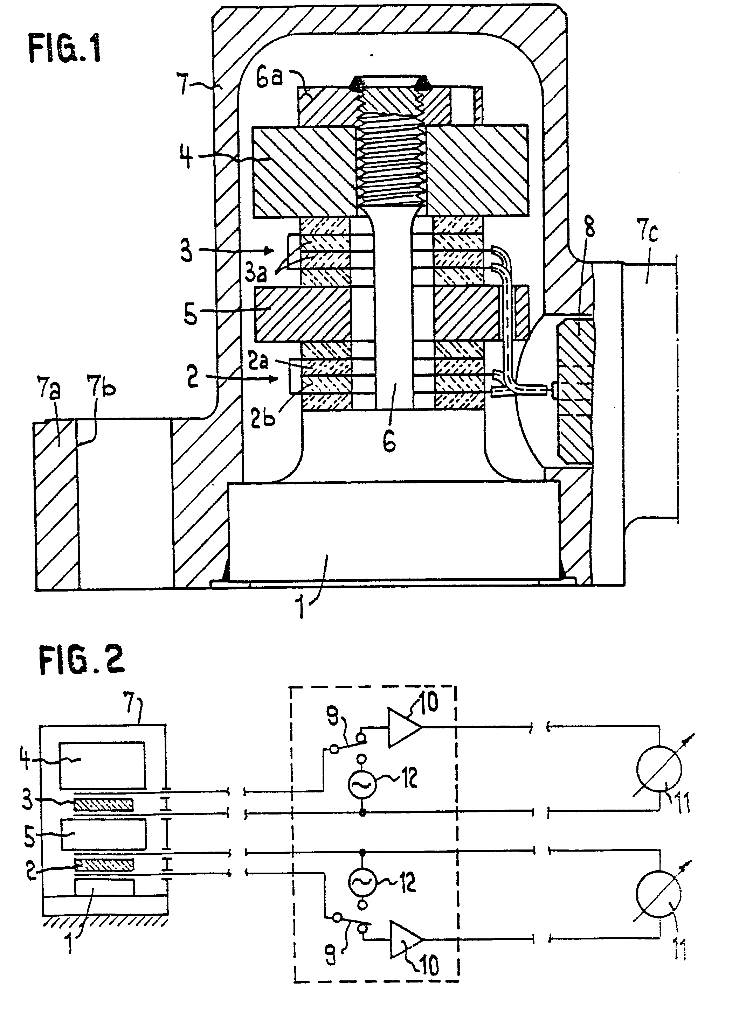

In der Beschreibung und in den Ansprüchen ist vereinfachend angenommen und ausgesagt, die beiden Wandler hätten übereinstimmende Empfindlichkeit. Diese Aussage ist selbstverständlich im obenerwähnten Sinne zu verstehen, das heisst unter bestimmten Bedingungen geben die beiden Wandler übereinstimmende Signale ab. Diese genaue Uebereinstimmung der Signale ist wesentlich bei der oben bereits erwähnten Schaltung des Accelerometers in einen Messkreis mit zwei Kanälen. Eine derartige Schaltung ist rein schematisch in Figur 2 dargestellt, in der auch das Accelerometer mit seinen wesentlichen Teilen rein schematisch dargestellt ist. Entsprechende Teile sind gleich bezeichnet wie in Figur 1. Beide Wandler 2 und 3 sind je über einen Umschalter 9 und einen Verstärker 10 mit einem Messinstrument 11 verbunden. Unter normalen Umständen zeigen die Messinstrumente 11 gleiche Beschleunigungswerte bzw. gleiche Vibrationen an. Gleiche Anzeigen in einem normalen Bereiche lassen darauf schliessen, dass sowohl das Accelerometer als auch die beiden Messkanäle normal arbeiten. Unterschiede in der Anzeige lassen darauf schliessen, dass entweder einer der Wandler 2 oder 3 oder einer der Verstärker 10 nicht normal arbeitet. Es ist jedoch auch erwünscht, im Stillstand, das heisst ohne Beschleunigungen bzw. Vibrationen, die Funktionstüchtigkeit des Systems zu überprüfen. Zu diesem Zwecke kann jeder der Umschalter an einem Generator 12 geeigneter Spannung und Frequenz umgelegt werden. Wird einer dieser Schalter umgelegt, so wird der zugeordnete Wandler an die Spannung des zugeordneten Generators gelegt und arbeitet nun als antreibender elektromechanischer Wandler, dessen Schwingung auf den anderen Wandler übertragen wird. Ueber den nach wie vor mit seinem Verstärker 10 und dem Messinstrument 11 verbundenen anderen Wandler erfolgt eine Anzeige, die darüber Aufschluss gibt, ob die beiden Wandler und der wirksame Messkanal normal arbeiten. Wenn dies der Fall ist, kann dann umgeschaltet werden, indem der andere Wandler mit dem zugeordneten Generator und der vorher mit dem Generator verbundene Wandler wieder mit seinem Messkanal verbunden wird. Es ist so eine vollständige Ueberprüfung der beiden Wandler und damit des Accelerometers insgesamt sowie der beiden Messkanäle im Stillstand möglich. Ein genauer Abgleich der Wandler 2 und 3 auf gleiche Empfindlichkeit bzw. gleiche Ausgangssignale ist bei einer Schaltung gemäss Figur 2 besonders wichtig, weil im Falle eines Defekts dieser Schaltung eine Auswechslung gegen eine neue Schaltung ohne Abstimmarbeiten erfolgen können muss.

Es sind verschiedene Ausführungsvarianten möglich. Die Zahl piezoelektrischer Elemente in den beiden Wandlern kann anders gewählt werden, wobei auch die seismischen Massen 4 und 5 entsprechend anzupassen sind. Aus den erwähnten Gründen hat man aber ein Interesse daran, mit einer möglichst geringen Anzahl piezoelektrischer Elemente auszukommen. Beim oben beschriebenen Ausführungsbeispiel ist angenommen, die beiden Wandler 2 und 3 wirken monoaxial, das heisst ihre Empfindlichkeitsachsen fallen zusammen mit der Achse des Bolzens 6. Es wäre jedoch auch möglich, Wandler vorzusehen, deren Empfindlichkeitsachsen senkrecht stehen. So kann beispielsweise der eine Wandler auf Druck, der andere auf Scherung empfindlich sein. Die beiden Wandler könnten auch in zwei senkrecht zueinander stehenden Richtungen maximale Empfindlichkeit auf Scherung aufweisen.

Wesentlich ist beim dargestellten Ausführungsbeispiel die Einfachheit der verwendeten Teile.

Die beiden seismischen Massen 4 und 5 sind einfache Ringe aus Stahl oder einem sonstigen geeigneten Material. Von besonderer Wichtigkeit ist dabei die Tatsache, dass beide Massen auch in montiertem Zustand leicht zugänglich sind, um zur Abstimmung abgearbeitet zu werden. Beim Ausführungsbeispiel können diese Massen leicht abgedreht werden. Es wäre aber auch eine etwas andere Form der Massen denkbar, wenn sie nur in montiertem Zustand zugänglich bleiben, um den Abgleich vorzunehmen.

Es ist auch dafür zu sorgen, dass die Druck-Vorspannung in den Wandlern praktisch temperaturunabhängig ist. Zu diesem Zweck kann vorzugsweise mindestens eine der seismischen Massen 4 oder 5 aus einem Material bestehen, dessen thermische Ausdehnung so ist, dass die mechanische Vorspannung der Anordnung im gesamten Einsatztemperaturbereich konstant ist.

**Patentansprüche**

1. Duales Accelerometer mit einer Montagebasis (1) und zwei übereinander zwischen der Montagebasis (1) und einer seismischen Masse (4) angeordneten elektromechanischen Wandlern (2, 3) sowie einer zwischen den beiden Wandlern (2, 3) angeordneten zusätzlichen seismischen Masse (5) dadurch gekennzeichnet, dass die beiden seismischen Massen (4, 5) in montiertem Zustand zugänglich und damit abstimmbar sind, und dass diese Massen (4, 5) und die Empfindlichkeiten der Wandler (2, 3) derart aufeinander abgestimmt sind, dass beide Wandler (2, 3) bei gegebener Beschleunigung gleiche Singale erzeugen.

2. Accelerometer nach Anspruch 1, dadurch gekennzeichnet, dass die Wandler (2, 3) piezoelektrische Elemente (2a, 3a) aufweisen, und dass der zwischen der zusätzlichen seismischen Masse (5) und der Montagebasis (1) liegende Wandler (2) weniger piezoelektrische Elemente (2a) aufweist als der zwischen den beiden Massen (4, 5) liegende Wandler (3).

3. Accelerometer nach Anspruch 2, dadurch gekennzeichnet, dass der zwischen den Massen (4, 5) liegende Wandler (3) ein piezoelektrisches Element (3a) mehr aufweist als der an der Montagebasis (1) liegende Wandler (2).

4. Accelerometer nach Anspruch 3, dadurch gekennzeichnet, dass der zwischen den Massen (4, 5) liegende Wandler (3) zwei piezoelektrische Elemente (3a) und der an der Montagebasis (1) liegende Wandler (2) ein piezoelektrisches Element (2a) aufweist.

5. Accelerometer nach Anspruch 3 oder 4, dadurch gekennzeichnet, dass der an der Montagebasis (1) liegende Wandler (2) zusätzlich ein Element (2b) aus ferroelektrischem Material enthält.

6. Accelerometer nach Anspruch 1, dadurch gekennzeichnet, dass eine der beiden seismischen Massen (4 oder 5) aus einem Material besteht, dessen thermische Ausdehnung so ist, dass die mechanische Vorspannung der Anordnung im gesamten Einsatztemperaturbereich konstant ist.

7. Accelerometer nach einem der Ansprüche 1 bis 6, dadurch gekennzeichnet, dass beide Wandler (2, 3) die gleiche Empfindlichkeitsachse aufweisen.

8. Accelerometer nach einem der Ansprüche 1 bis 7, dadurch gekennzeichnet, dass die seismischen Massen (4, 5) und die Wandler (2, 3) durch einen gemeinsamen, sie durchsetzenden Bolzen (6) zusammengehalten und vorgespannt sind.

9. Verfahren zur Herstellung des Accelerometers nach Anspruch 1, wobei zwei Wandler (2, 3) und zwei seismischen Massen (4, 5) auf eine Montagebasis (1) montiert und vorgespannt werden, dadurch gekennzeichnet, daß zuerst die seismische Masse (4) abgearbeitet wird bis die Soll-Empfindlichkeit des zwischen den Massen liegenden Wandlers (3) erreicht ist, und dass dann die zusätzliche seismische Masse (5) abgearbeitet wird, bis die Soll-Empfindlichkeit des zwischen ihr und der Montagebasis (1) liegenden Wandlers (2) erreicht ist.

10. Anwendung des Accelerometers nach Anspruch 1, mit zwei Wandlern (2, 3) und zwei seismischen Massen (4, 5) auf einer Montagebasis (1), dadurch gekennzeichnet, daß beide Wandler (2, 3) mit je einer Messvorrichtung (10, 11) verbunden sind, und dass mindestens einer der Wandler (2, 3) an einen Generator (12) umschaltbar ist, um dabei eine mechanische Schwingung an den anderen Wandler (3 bzw. 2) zu übertragen, wobei die mit dem anderen Wandler verbundene Messvorrichtung (10, 11) eine Anzeige über die Funktionstüchtigkeit der beiden Wandler (2, 3) liefert.

**Claims**

1. A dual accelerometer with a mounting base (1) and two electromechanical transducers (2, 3) arranged between the mounting base (1) and a seismic mass (4), and with an auxiliary seismic mass (5) arranged between the two transducers (2, 3), characterized in that, in the mounted condition, the two seismic masses (4, 5) are accessible and capable to be tuned and in that the masses (4, 5) and the sensitivities of the transducers (2, 3) are tuned to each other such that both transducers (2, 3) generate same signals for a given acceleration.

2. A dual accelerometer according to claim 1, characterized in that the transducers (2, 3) comprise piezoelectric elements (2a, 3a) and in that the transducer (2) located between the auxiliary seismic mass (5) and the mounting base (1) comprises less piezoelectric elements (2a) than the transducer (3) located between the two masses (4, 5).

3. A dual accelerometer according to claim 2, characterized in that the transducer (3) located between the masses (4, 5) comprises one piezoelectric element more than the transducer (2) located on the mounting base (1).

4. A dual accelerometer according to claim 3, characterized in that the transducer (3) located between the masses (4, 5) comprises two piezoelectric elements (3a) and in that the transducer (2) located on the mounting base (1) comprises one piezoelectric element (2a).

5. A dual accelerometer according to claim 3 or 4, characterized in that the transducer (2) located on the mounting base (1) further comprises an element (2b) of ferroelectric material.

6. A dual accelerometer according to claim 1, characterized in that one of the seismic masses (4 or 5) consists of a material the thermal expansion of which is such that the mechanical initial load of the device is constant for the whole range of working temperature.

7. A dual accelerometer according to one of the claims 1 to 6, characterized in that both transducers have the same axis of sensitivity.

8. A dual accelerometer according to one of the claims 1 to 7, characterized in that the seismic masses (4, 5) and the transducers (2, 3) are assembled and prestressed by a common bolt (6) running through them.

9. A method of manufacturing the accelerometer according to claim 1 in which two transducers (2, 3) and two seismic masses (4, 5) are mounted and prestressed on a mounting base (1), characterized in that at first the seismic mass (4) is worn out until the nominal sensitivity of the transducer (3) located between the masses is achieved and in that the auxiliary seismic mass is then worn out until the nominal sensitivity of the transducer (2) located between said mass and the mounting base (1) is achieved.

10. A use of the accelerometer according to claim 1 with two transducers (2, 3) and two seismic masses (4, 5) on a mounting base (1), characterized in that each of the two transducers (2, 3) is connected to a measuring device (10, 11) and in that at least one of the transducers (2, 3) is capable to be connected to a generator in order to transmit to the other transducer (3, resp. 2) a mechanical vibration, the measuring device (10, 11) connected to the other transducer then delivering an indication regarding the working capability of both transducers (2, 3).

**Revendications**

1. Accéléromètre double avec une base de montage (1) et deux transducteurs électromécaniques (2, 3) disposés entre la base de montage (1) et une masse sismique (4), et avec une masse sismique auxiliaire (5) disposée entre les deux transducteurs (2, 3), caractérisé en ce qu'en condition assemblée, les deux masses sismiques (4, 5) sont accessibles et ainsi accordables et en ce que les masses (4, 5) et les sensibilités des transducteurs (2, 3) sont accordées l'une à l'autre de manière que les deux transducteurs (2, 3) produisent des mêmes signaux pour une accélération donnée.

2. Accéléromètre selon la revendication 1, caractérisé en ce que les transducteurs (2, 3) comprennent des éléments piézoélectriques (2a, 3a) et en ce que le transducteur (2) placé entre la masse sismique auxiliaire (5) et la base de montage (1) comprend moins d'éléments piézoélectriques (2a) que le transducteur (3) placé entre les deux masses (4, 5).

3. Accéléromètre selon la revendication 2, caractérisé en ce que le transducteur (3) placé entre les masses (4, 5) comprend un élément piézoélectrique (3a) de plus que le transducteur (2) placé sur la base de montage (1).

4. Accéléromètre selon la revendication 3, caractérisé en ce que le transducteur (3) placé entre les masses (4, 5) comprend deux éléments piézoélectriques (3a) et en ce que le transducteur (2) placé sur la base de montage (1) comprend un élément piézoélectrique (2a).

5. Accéléromètre selon la revendication 3 ou 4, caractérisé en ce que le transducteur (2) placé sur la base de montage (1) comprend en outre un élément (2b) en matériau ferroélectrique.

6. Accéléromètre selon la revendication 1, caractérisé en ce que l'une des masses sismiques (4 ou 5) consiste en un matériau dont la dilatation thermique est telle que la précontrainte mécanique du dispositif est constante dans la totalité du domaine des températures de service.

7. Accéléromètre selon l'une des revendications 1 à 6, caractérisé en ce que les deux transducteurs (2, 3) ont le même axe de sensibilité.

8. Accéléromètre selon l'une des revendications 1 à 7, caractérisé en ce que les masses sismiques (4, 5) et les transducteurs (2, 3) sont assemblés et précontraints par un boulon commun (6) les traversant.

9. Procédé de fabrication de l'accéléromètre selon la revendication 1, dans lequel deux transducteurs (2, 3) et deux masses sismiques (4, 5) sont montés et précontraints sur une base de montage (1), caractérisé en ce que la masse sismique (4) est d'abord ajustée par usure jusqu'à ce que la sensibilité de consigne du transducteur (3) placé entre les masses soit atteinte et en ce que la masse sismique auxiliaire est ensuite ajustée par usure jusqu'à ce que la sensibilité de consigne du transducteur (2) placé entre elle et la base de montage (1) soit atteinte.

10. Utilisation de l'accéléromètre selon la revendication 1 avec deux transducteurs (2, 3) et deux masses sismiques (4, 5) sur une base de montage (1), caractérisée en ce que les deux transducteurs (2, 3) sont reliés chacun à un dispositif de mesure (10, 11) et en ce qu'au moins un des transducteurs (2, 3) est susceptible d'être connecté à un générateur afin de transmettre à l'autre transducteur (3, resp. 2) une vibration mécanique, le dispositif de mesure (10, 11) relié à l'autre transducteur délivrant alors une indication au sujet de la capacité de fonctionnement des deux transducteurs (2, 3).

**FIG.1**

**FIG.2**